# EUROPEAN PATENT APPLICATION

(11) **EP 0 867 994 A2**
(43) Date of publication of application: **30.09.1998**
(21) Application number: 98850041.9
(22) Date of filing: 23.03.1998
(51) Int. Cl.: H02G 3/10, H02G 3/04

(54) **Duct system for electrical installations**

(30) Priority: 24.03.1997 SE 9701083
(71) Applicant: Eldon AB, 571 83 Nässjö (SE)
(72) Inventor: Ekström, Bo, 311 41 Falkenberg (SE)
(74) Representative: Hopfgarten, Nils

(57) **Abstract**

A duct system for electrical installations comprises a duct (2) designed to be attached to a wall or similar surface and having at least one channel (12, 14) in which electric wires are inteneded to be laid, the duct being provided with attachment means (24; 30, 32) for securing at least one retaining device (20) for electric components and apparatus on the outside of the duct in optional positions along the duct. The retaining device is provided with attachment means (48) for pivotable mounting of a cover (44, 50), which cover is pivotable between an open position and a closed position in which, together with the retaining device, it defines a space for said electric components and apparatus.

## Description

The present invention relates to a duct system for electrical installations, comprising a duct designed to be attached to a wall or similar surface and having at least one channel in which electric wires are intended to be laid, the duct being provided with attachment means for securing at least one retaining device for electric components and apparatus outside the duct in optional positions along the longitudinal direction of the duct.

Various duct systems for laying electric wires or cables, also designed to enable mounting of specially designed components and apparatus in the duct are already known, such as in DE-A1-3,708,357 and sE-B-463,182. Disadvantages with these previously known systems include the drawback that only apparatus specifically designed to fit the duct can be used.

SE-B-449,674 describes a duct system for drawing cables, wires and the like wherein auxiliary equipment in the form of a terminal box can be welded to the outside of the duct.

GB-A-2,174,254 describes another duct system having an attachment plate designed to be secured to a wall or the like, from which partition walls protrude. At the attachment plate and outer edges of these walls are snap-in covering portions of various designs so that several delimited channels are formed, designed to house different types of wires. One drawback of this design is that the covering portions must be completely removed from the attachment plate to allow access to the interior of the channels, which can be a complicated operation.

The object of the present invention is to provide a duct system for electrical installations having a retaining device for electric components and apparatus applied on the outside of the duct and provided with a cover that can be easily opened and closed over a space for components and apparatus.

This object is achieved with a duct system of the type described in the introductory portion having the characteristics defined in claim 1.

With the cover arranged pivotable on the retaining device, it is still attached thereto in its open position and, when work on components and apparatus attached to the retaining device has been completed, the spaced can be easily closed again by swinging the cover to its closed position.

According to an advantageous embodiment of the duct system according to the invention duct and retaining device are dimensioned to fit electric apparatus and components manufactured in accordance with EN standards, and the retaining device is provided with attachment devices for snapping apparatus and components standardised with this norm into place, i.e. the dimensions of the cover and the positioning of the apparatus are performed according to DIN 43871, the dimensions of the apparatus according to DIN 43880, and the attachment devices are designed according to EN 50022. The duct system according to the invention thus does not require any particular design of the components or apparatus for them to fit the system, but it is generally usable for components and apparatus manufactured in accordance with EN standards. This means that the duct system can be used with a very large selection of components and apparatus of different makes.

According to another advantageous embodiment of the duct system according to the invention several retaining devices with their covers can be combined in accordance with a module system, to form apparatus boxes of desired extension in the longitudinal direction of the duct. Great flexibility is thus achieved and the apparatus box can easily be expanded and modified to suit current requirements. According to yet another advantageous embodiment of the duct system according to the invention, duct, retaining device and cover are made of electrically conducting material and, when combining several retaining devices, adjacent retaining devices are connected using guiding pins of electrically conducting material, which align the retaining devices in relation to each other and also form continuous earthing of ducts and apparatus boxes. Efficient, continuous earthing of the system is thus achieved, which also gives low electromagnetic fields inside the duct and apparatus boxes.

According to other advantageous embodiments of the duct system according to the invention, the duct is designed for mounting on a wall or equivalent surface using brackets with an intermediate slide, the surfaces of said bracket and said slide facing each other being provided with ridges to fix the duct in optional positions on the bracket. The distance of the duct to the wall can thus be varied and adjusted to any unevenness in the wall, for instance.

According to yet other advantageous embodiments the duct system according to the invention in which duct and retaining device are designed for the retaining device to be mounted below the duct, the cover comprises a lower part designed to be mounted pivotably in relation to the retaining device, and a front part pivotably mounted on the lower part intended in closed position to form an apparatus box into the interior of which said electric apparatus and components are intended to be inserted. The attachment means for fitting the lower part onto the retaining device and the attachment means for fitting the front part onto the lower part are designed so that the lower part is pivotable only a limited angle in relation to the retaining device and the front part is pivotable only a limited angle in relation to the lower part. The lower part and front part of the cover are also displaceable laterally in relation to the retaining device. In this way the lower part and the front part can be swung up to allow free access to the interior of the retaining device while still being retained in a certain position in relation to the retaining device. Since the lower part and front part can also be displaced laterally in relation to the retaining device, they can be moved out of the way if they obstruct access to the retaining device when in their open position.

According to yet another advantageous embodiment of the device according to the invention the front part of the cover is provided with one or more openings for access from the front side of the apparatus box to its interior. Wall sockets, switches, etc. inside the apparatus box are thus accessible through these windows.

According to yet another advantageous embodiment of the duct system according to the invention the duct is provided with one channel for power lines and one channel for communication lines, such as telephone and computer wires, bus systems for controlling lighting, heating, etc., means being provided in the power line channel for mounting of a screen of insulating material designed to limit a closed space in the channel, separated from the rest of the channel. In the same channel, thus, ordinary power lines provided with an outer sheath can be placed outside the screened area, as well as power lines without an outer sheath inside the screened area, in order to avoid wear between the sheathed and unsheathed lines.

The invention will now be explained in more detail with the aid of embodiments described by way of example with reference to the accompanying drawings, on which
- Figure 1: shows in perspective a duct in the duct system according to the invention,
- Figure 2: illustrates the attachment of the retaining device to the lower side of the duct in the duct system according to the invention,
- Figure 3: shows the retaining device in perspective,
- Figure 4: illustrates mounting of the lower part and front part on the retaining device,
- Figure 5: illustrates mounting of end walls on the retaining device with the lower and front parts in closed position,
- Figure 6: illustrates the combination of two retaining devices,
- Figure 7: shows examples of apparatus boxes of different sizes fitted on the lower side of the duct,
- Figure 8: illustrates the assembly of a lid over the duct,
- Figure 9: shows an insulating screen arranged in one channel of the duct to define a closed space for unsheathed electric wires, for instance,
- Figure 10: illustrates how the insulating screen is folded aside so that the unsheathed conductors can be passed down to an apparatus box (not shown in the drawing) situated beneath the duct,
- Figure 11: shows a view from above of the duct in the duct system according to the invention, with both sheathed and unsheathed conductors,
- Figure 12: illustrates assembly of the duct on a wall with bracket and an intermediate slide
- Figure 13: shows a design of the slide to support convector grids,
- Figure 14: shows a protective covering to be snapped over the front part of the apparatus box, and
- Figure 15: shows an example of a retaining device or apparatus box with the front removed, in which various electric components are mounted.

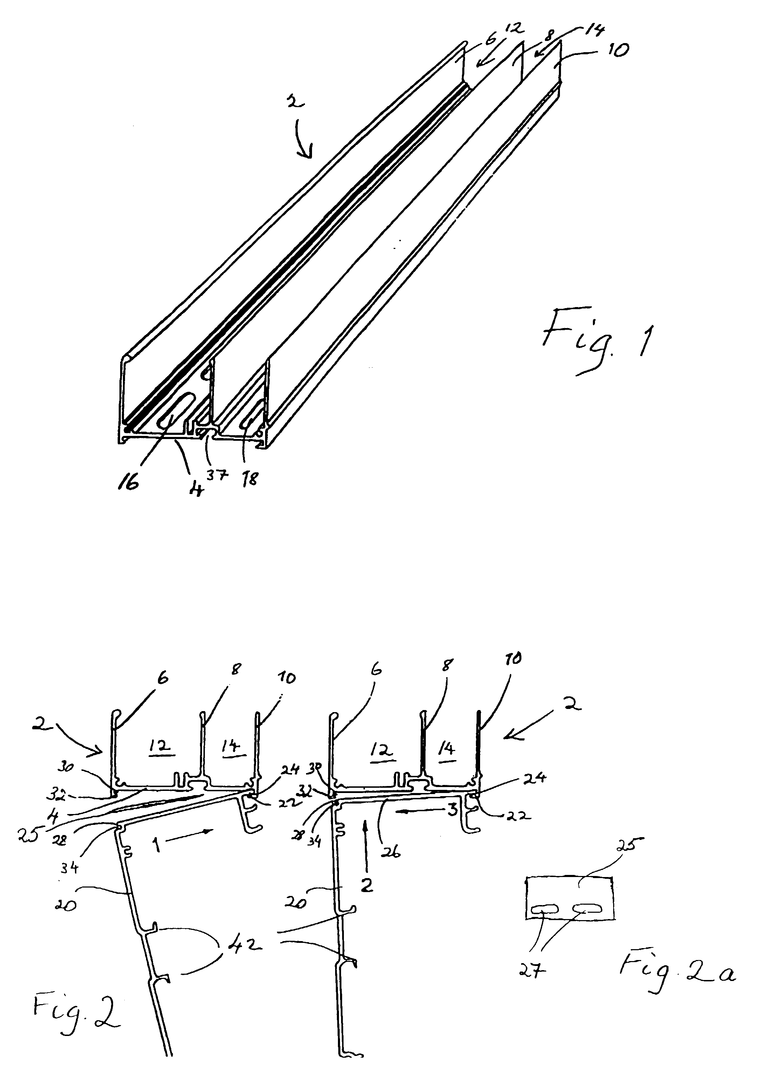

The duct system comprises a duct 2 with three partition walls 6, 8, 10 standing upright at right-angles to the bottom plate 4 and defining two spaces or channels 12, 14 for power lines and communication lines such as telephone, computer and EIB lines, respectively, the wires being inserted into the channels from above. Lead-through openings 16, 18 are provided at regular intervals in the bottom plate 4 in the "power-line channel" 12 and "communication-line channel" 14, respectively, as shown in Figure 1.

A retaining device 20 is designed for attachment below the bottom plate 4 of the duct 2, as illustrated in Figure 2. The upper part of the retaining device 20 is provided with an edge 22 which, when the retaining device is being fitted, is first inserted into a groove 24 in the bottom plate 4 below the duct wall 10, as illustrated by the arrow 1 in Figure 2. An intermediate sheet 25 is inserted between the bottom plate 4 of the duct and the upper part 26 of the retaining device 20 to prevent access to the power line or communication line channel. The upper part 26 of the retaining device 20 is then pivoted up towards the bottom plate 4 as illustrated by the arrow 2 in Figure 2, and the retaining device is moved to the left in the Figure so that the lip 28 engages in the groove 30 in the bottom plate 4 below the wall 6 and the lip 32 engages in the groove 34 in the retaining device 20 by moving the retaining device 20 to the left in Figure 2 as illustrated by the arrow 3. The retaining device 20 is thus attached beneath the duct 2. To ensure safe attachment of the retaining device 20 to the duct 2, a spring device is provided to press the retaining device to the left in Figure 2 (not shown in the Figure), so that reliable engagement is ensured between grooves 30, 34 and lips 28, 32, respectively.

The intermediate sheet 25, which is the same width as the duct 2, is made of insulating material and is provided with openings 27 corresponding to the openings 16 and 18, respectively, in the bottom plate 4, as illustrated in Figure 2a showing a view of the intermediate sheet from above. The intermediate sheet 25 can be turned so that its openings 27 are either opposite the openings 16 thus allowing access to the power line channel 12 and preventing access to the communication line channel 14, or so that the openings 27 are opposite the openings 18 thus allowing access to the communication line channel 14 and preventing access to the power line channel 12.

The retaining device 20 can be fitted at an optional point along the duct 2 and, after fitting, can be displaced along the duct 2 and locked in an optional position thereon with locking screws (not shown) which pass through the holes 36 in the top of the retaining device 20 and into the space 37 formed below the partition wall 8 in the duct 2, see Figures 3 and 1. The top of the retaining device 20 is also provided with openings 38, 40 corresponding to the openings 16 and 18, respectively in the bottom plate 4 of the duct 2, and the retaining device 20 is intended to be locked in the longitudinal direction of the duct 2 at points where the openings 16, 18 and 38, 40, respectively are immediately opposite each other so that the cables can be passed from the channels 12 and 14 down to electric apparatus mounted in the retaining device 20.

The retaining device 20 has an attachment rail 42, designed in accordance with EN standards onto which various standardised electric components, such as switches, wall sockets, etc. can be snapped,as mentioned above, see Figures 2 and 3.

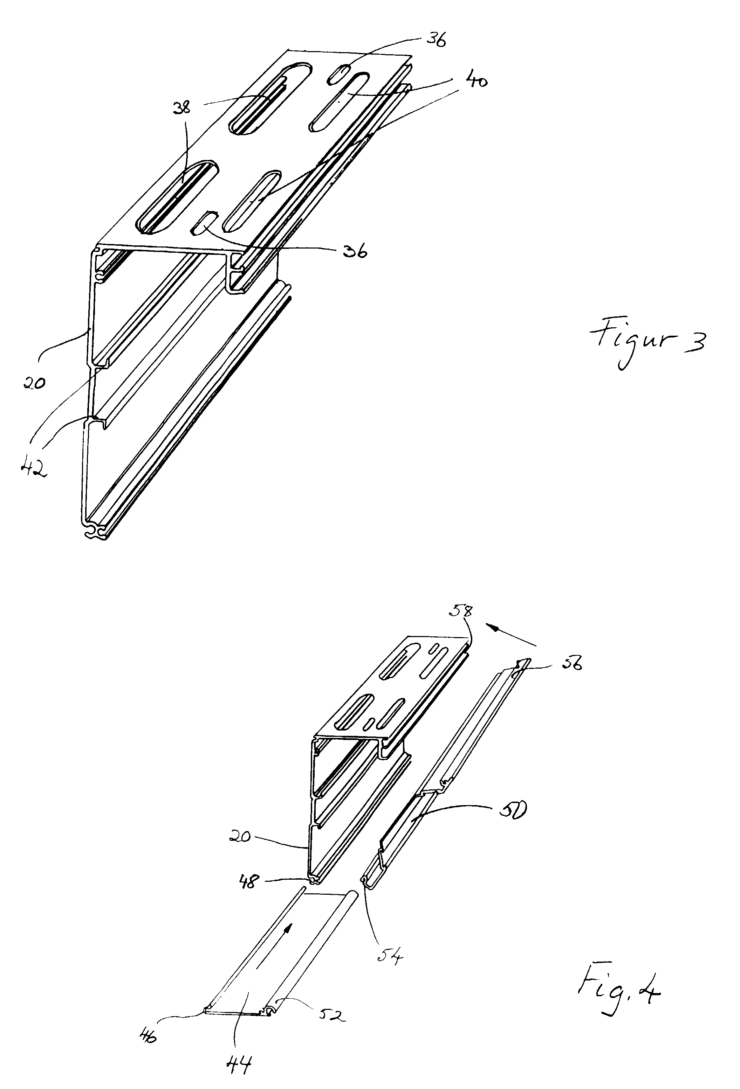

A bottom part 44 for the retaining device 20 is intended to be attached by one longitudinal edge in the lower edge of the retaining device 20, by inserting the bottom part 44 so that reciprocal engagement members 46, 48 in the bottom part 44 and retaining device 20, respectively, engage each other, see Figure 4. The engagement members 46, 48 are designed to function substantially as a hinge allowing the bottom part 44 to be swung a limited angle in relation to the retaining device.

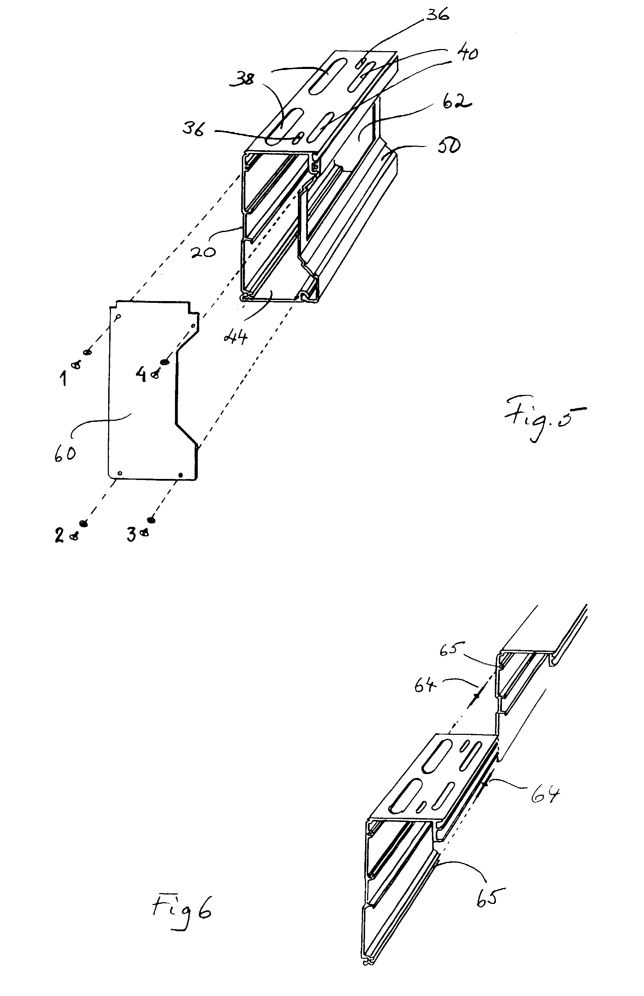

Engagement members 52 are arranged in a similar manner at the other longitudinal side of the bottom part 44 for engagement with reciprocal engagement members 54 in a front part 50. The engagement members 52, 54 also function essentially as a hinge enabling the front part 50 to be swung in relation to the bottom part 44, such that the front part 50 can be swung up and locked by engagement between locking means 56, 58 at the upper edge of the front part 50 and upper edge of the retaining device 20, respectively, as can be seen in Figures 4 and 5.

Both the front 50 and the bottom 44 can thus also be displaced sideways to allow access to the interior of the apparatus box or retaining device for service, etc. when necessary.

The addition of end walls 60 on the retaining device 20 provided with bottom 44 and front parts 50 protects components and apparatus mounted inside the apparatus box thus formed against contact, see Figure 5. Figure 5 shows a front part 50 with a window 62 through which switches and power-points, for instance, are accessible.

Several apparatus boxes formed in this way can be combined to form apparatus boxes of varying sizes according to a module system. To achieve this, guiding pins 64 are inserted into corresponding guide channels 65 in the retaining device 20 to align the retaining devices 20 to each other, as illustrated in Figure 6, and to connect them electrically.

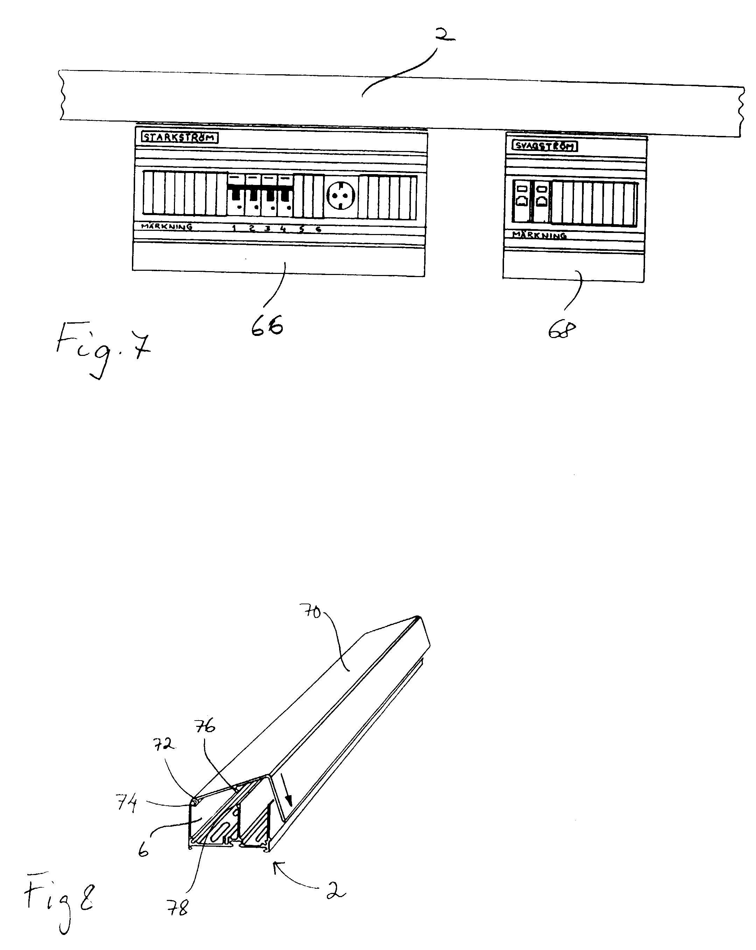

Figure 7 shows examples of apparatus boxes 66, 68 of different sizes, built up in this way, fitted on the lower side of the duct 2.

Figure 8 illustrates how a lid 70 is fitted over the duct.

The lid is thus provided along one longitudinal edge with an engagement member 72 designed to be hooked into a reciprocal engagement member 74 at the upper edge of the wall 6. These engagement members 72, 74 act substantially as a hinge about which the lid 70 can be swung down over the duct 2, the inside of the lid 70 and the upper edge of the wall 8 being provided with locking means 76 and 78, respectively, which lock the lid in closed position of the duct 2.

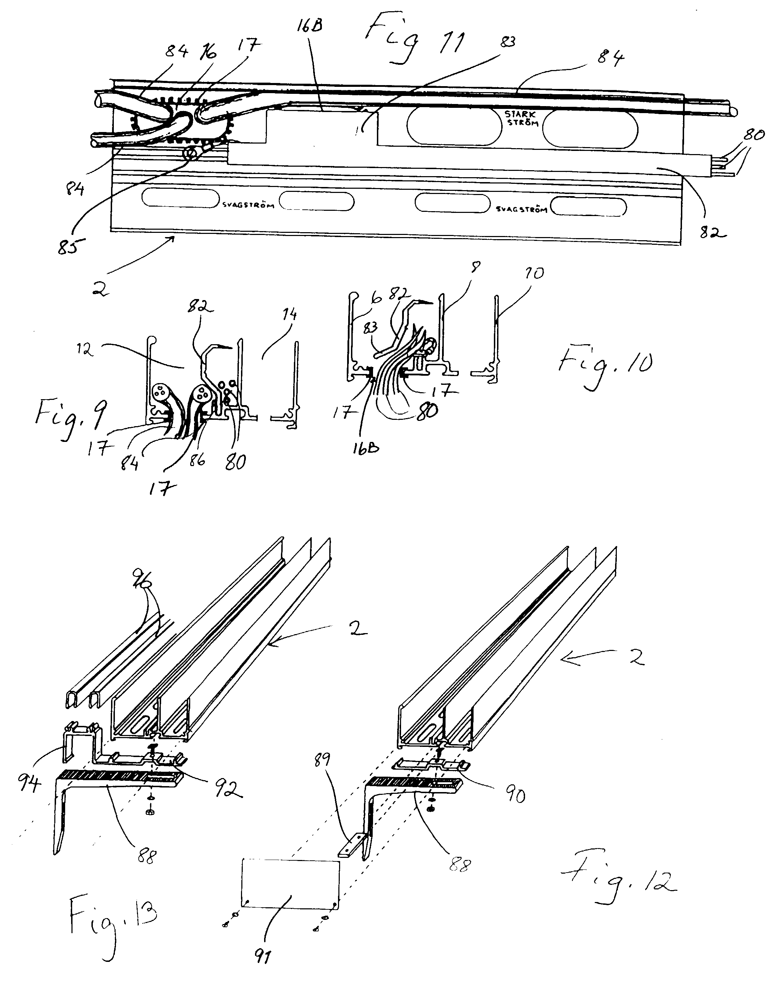

Even conductors with only basic insulation, without an outer sheath, can be placed in the power line channel 12, but in that case behind a special plastic screen 82 that prevents contact with the unsheathed conductor. If both sheathed and unsheathed conductors are placed in the same channel 12, the unsheathed conductors should be placed behind such a plastic screen 82 while the sheathed conductors 84 should be placed outside the screen 82, see Figure 9, to avoid wear between the sheathed and unsheathed conductors. The plastic screen 82 extends along the length of the duct 2 in a groove 86 in the bottom plate 4 of the duct 2 and when the unsheathed conductors 80 are to be passed down through an opening 16B in the duct, the plastic screen 82 is moved aside at the place for the opening, see Figures 10 and 11 in which 83 denotes the part of the plastic screen 82 that is moved aside.

Figure 11 is a view of the duct 2 from above, with both sheathed conductors 84 and unsheathed conductors 80, the sheathed conductors 84 being passed down through an opening 16 and the unsheathed conductors 80 through an opening 16B. Both openings are provided with protection 17 around the edge in order to avoid damage to wires and conductors.

The duct 2 is earthed with screw and cable shoe, shown at 85 in Figure 11.

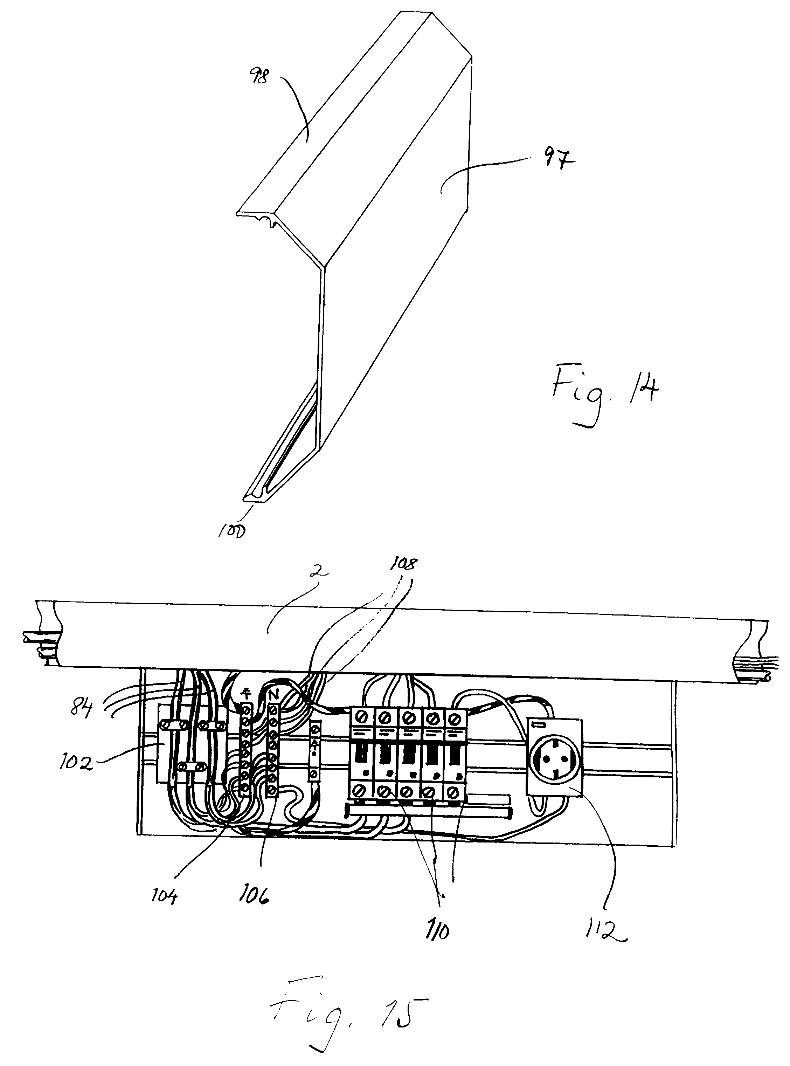

The duct 2 is designed to be mounted on brackets 88 attached to a wall, with an intermediate slide 90, 92, see Figures 12 and 13. The upper side of the bracket 88 and the lower side of the slide 90, 92 are provided with ridges to position the duct 2 in optional positions along the support surface of the bracket 88.

The slide 92 may be provided with a retaining part 94 for carrying convector grids 96 as shown in Figure 13.

Extension pieces 89 are inserted at the joints between ducts. The extension pieces 89 are provided with two index screws screwed to the ducts 2 on each side of the joint to prevent them from sliding apart, thereby ensuring continuous earthing of the entire duct system.

An end plate 91 is fitted wherever the end of the duct is visible.

Figure 14 shows a protective covering 97 which can be snapped over the front 50 of the apparatus box so that the window 62 in Figure 5, for instance, is also covered. The top edge 98 of the covering is somewhat wider than its lower edge 100 and a space will therefore be formed between the front 50 and this lower edge 100 through which electric leads, for instance, from the interior of the apparatus box can pass. This covering 97 covers wall sockets and other apparatus in the apparatus box as well as reduces the electromagnetic radiation.

Figure 15 shows an example of retaining device or apparatus box with the front removed, in which sheathed power lines 84 are fitted in pull-relief clamps 102 and connected to earth and zero contact blocks 104 and 106, respectively. Unsheathed wires 108 are also placed in the apparatus box. The apparatus box also contains fuses 110 and a wall socket 112. The apparatus box is earthed with earth clamps.

The retaining device may alternatively be mounted on the upper side of the duct 2 and an apparatus box be built up on the upper side of the duct in similar manner to that described above. In this case the lid of the duct is removed at the point where the retaining device is mounted on the duct.

Great flexibility is achieved with the duct system described above. The system is easy to build up and modify. The complete duct system can be passed through walls or be terminated at the wall and the wires laid in tubes through the wall. Various apparatus such as wall sockets, fuse units, switches, transducers, etc., can be built into the system. The duct system is also designed so that all standard apparatus can easily be fitted. Fuse panels are thus placed in the duct system in the room where the duct system is installed.

The duct system is suitably made of a conducting material such as aluminium, and the complete system of ducts, lids, apparatus boxes, end pieces, etc., is protector earthed. The duct can also be provided with end pieces where the ends are visible.

In new buildings the lid is fitted to the duct, fronts to apparatus boxes and end pieces, when the painting work has been completed.

## Claims

1. A duct system for electrical installations, comprising a duct (2) designed to be attached to a wall or similar surface and having at least one channel (12,14) in which electric wires (80,84) are intended to be laid, the duct being provided with attachment means (24,30,32) for securing at least one retaining device (20) for electric components and apparatus (102,104,106,108,110,112) on the outside of the duct in optional positions along the longitudinal direction of the duct, **characterized in that** the retaining device (20) is provided with attachment means (48,58) for pivotable mounting of a cover (44,50), which cover is pivotable between an open position and a closed position, and in that end walls (60) are mountable against the retaining device and the cover in its closed position for defining a closed space for said electric components and apparatus (102,104,106,108,110,112).

2. A system as claimed in claim 1, **characterized in that** the attachment means (22,24,28, 30, 32, 34) for securing the retaining device (20) to the duct (2) comprise members for snapping the retaining device to the outside of the duct.

3. A system as claimed in claim 1 or claim 2, **characterized in that** duct and retaining device are designed according to the standards DIN 43871 and EN 50022 and dimensioned to fit electric apparatus and components manufactured in accordance with DIN 43880 standard, and in that the retaining device is provided with attachment devices for snapping apparatus and components standardised with this norm into place.

4. A system as claimed in any of claims 1-3, **characterized in that** several retaining devices (20) with associated covers (44,50) can be combined in accordance with a module system to form apparatus boxes (66,68) of desired extension in the longitudinal direction of the duct (2).

5. A system as claimed in claim 4, **characterized in that** duct (2), retaining device (20) and cover (44,50) are made of electrically conducting material and in that when combining several retaining devices, adjacent retaining devices are connected using guiding pins (64), also of electrically conducting material, which align the retaining devices in relation to each other and also form a continuous earthing of ducts and apparatus boxes.

6. A system as claimed in any of claims 1-5, **characterized in that** the duct (2) is designed for mounting on a wall or equivalent surface using brackets (88) with intermediate slide (90,92).

7. A system as claimed in claim 6, **characterized in that** the slide (92) is provided with a retaining part (94) for convector grids (96) for the passage of air.

8. A system as claimed in claim 6 or claim 7, **characterized in that** the surfaces of the bracket (88) and the slide (90,92) facing each other are provided with ridges to fix the duct (2) in optional positions on the bracket.

9. A system as claimed in any of claims 1-8, wherein duct (2) and retaining device (20) are designed for the retaining device to be mounted below the duct, **characterized in that** the cover comprises a lower part (44) designed to be mounted pivotably in relation to the retaining device (20), and a front part (50) pivotably mounted on the lower part intended in closed position to form an apparatus box into the interior of which said electric apparatus and components (102,104,106,108,110,112) are intended to be inserted.

10. A system as claimed in claim 9, **characterized in that** the attachment means (46,48) for fitting the lower part (44) onto the retaining device (20) and the attachment means (52,54) for fitting the front part (50) onto the lower part are designed so that the lower part is pivotable a limited angle in relation to the retaining device and the front part is pivotable a limited angle in relation to the lower part.

11. A system as claimed in claim 9 or claim 10, **characterized in that** the lower part (44) and front part (50) of the cover are displaceable laterally in relation to the retaining device (20).

12. A system as claimed in any of claims 9-11, **characterized in that** the front part (50) of the cover is provided with one or more openings (62) for access from the front side of the apparatus box to its interior.

13. A system as claimed in any of claims 10-12, **characterized in that** a protective covering (97) is arranged to be snapped onto the apparatus box to cover the front part of the apparatus box.

14. A system as claimed claim 13, **characterized in that** the protective covering (97) is so designed that, when it is snapped onto the apparatus box, a space is formed between the lower edge of the protective covering and the front part to allow passage of electric wires and cables from the apparatus box.

15. A system as claimed in any of claims 9-14, **characterized** in that the bottom plate (4) of the duct (2) and the upper part (26) of the retaining device (20) are provided with openings (16,18,38,40)that can be aligned with each other to permit passage of electric wires (80,84) from the duct to electric apparatus and components (102,104,106,108,110,112) arranged in the retaining device.

16. A system as claimed in claim 15, **characterized in that** an intermediate sheet (25) of insulating material is designed to be applied between the bottom plate (4) of the duct (2) and the upper part (26) of the retaining device (20), said intermediate sheet having openings (27) that can be aligned with openings (16,18,38,40) in the bottom plate and retaining device to access to either the power line or the communication line channel (12,14).

17. A system as claimed in claim 16, **characterized in that** the openings (27) of the intermediate sheet (25) are situated so that they can be aligned with the openings (16,18,38,40) of the bottom plate and the retaining device to either the power line channel (12) or the communication line channel (14), depending on the orientation of the intermediate sheet.

18. A system as claimed in any of claims 10-17, **characterized in that** the duct (2) comprises a bottom plate (4) having walls (6,8,10) running at right angles thereto in the longitudinal direction of the duct to define at least two separate channels (12,14) in the duct.

19. A system as claimed in claim 18, wherein the duct (2) is provided with one channel (12) for power lines and one channel (14) for communication lines, such as telephone and computer wires, bus systems for controlling lighting, heating, etc., **characterized in that** means (86) are provided in the power line channel (12) for mounting of a screen (82) of insulating material designed to limit a closed space in the channel, separated from the rest of the channel.

20. A system as claimed in any of claims 9-19, **characterized in that** a lid (7) is fitted in detachable manner on the upper edge of one of the outer upright walls (6,10) of the duct to close the upper side of the duct (2) by swinging down the lid.
